# EUROPEAN PATENT APPLICATION

(11) **EP 1 099 368 A2**
(43) Date of publication of application: **16.05.2001**
(21) Application number: 00306756.8
(22) Date of filing: 08.08.2000
(51) Int. Cl.: A01G 9/10

(54) **Plant container and method of manufacture**

(30) Priority: 10.11.1999 JP 31914599
(71) Applicant: Iwamoto, Yasuo, Sanbu-gun, Chiba-ken, Yamamuro 1196 (JP)
(72) Inventor: Iwamoto, Yasuo, Sanbu-gun, Chiba-ken, Yamamuro 1196 (JP)
(74) Representative: King, James Bertram

(57) **Abstract**

A flower pot (1) which decomposes, when buried in the soil (3) to form a fertiliser, the pot (1) being formed by mixing a biodegradable polymer with dried and pulverised animal or plant waste. In an embodiment about 100 parts by volume vegetable waste (80 to 90% water content) is mixed with about 60 parts by volume adjusting material (15% water content) and the mixture heated and fermented with the addition of a soil borne fungi (bacillus uchishiro), the mixture being agitated for 7 to 8 hours at a temperature of 75°C, and thereafter dried to a water content less that 1% and pulverised, after which a biodegradable polymer is added in a proportion of 35% by weight the mixture being agitated to form a moulding consistency.

## Description

This invention relates to a plant container or flower pot produced from waste animal and plant materials and a process of manufacturing same. More specifically this invention relates to a flower pot which can contribute to disposal of animal and plant waste including garbage from households, retail stores, schools, food-manufacturing plants or the like, as well as providing a solution to the problem of disposing of flower pots when made of a plastic or clay material. The pot of this invention can supply nutrients required by seedlings of vegetables and flowers. This invention also relates to the manufacture of a flower pot.

Flower pots used by gardeners are mainly made from materials such as plastics, ceramics, clay and wood, more recently flower pots having a cup shape and made from a vinyl chloride film having a black colour are used for selling seedlings of vegetables and flowers. Garbage sent to garbage dumps is in most cases disposed of by means of burying or burning, and only a portion of the garbage is composted and used as an organic fertiliser. In addition, a large quantity of animal and vegetable wastes are discarded in association with the production of food products. This residue is also buried or burnt.

As described above, there is no effective reuse of animal and plant waste being mainly garbage.

In the case of pots having the form of a cup and used for plants and seedlings, the quantity used is vast, and in addition, when the plants are replanted removal is required from the pots involving labour.

It is an object of this invention to provide a flower pot which can substantially contribute to the disposal of animal and plant waste and also which decomposes and functions as a fertiliser when directly buried in a garden or in a flower bed. This invention provides also a process of manufacturing such pots.

According to this invention there is provided a plant container formed by mixing a biodegradable polymer with dried and pulverised animal or plant waste material.

This invention provides also a process for the production of a plant container from animal and/or plant waste forming a main raw ingredient, the process being **characterised by** the steps; drying the animal and/or plant waste; pulverising the dried waste into a fine powder; mixing a biodegradable polymer with the pulverised waste powder; agitating the mixture to a moulding consistency for forming into a flower pot and, feeding the mixture to a moulding machine to form a flower pot.

This invention is further described with reference to an embodiment, as an example, and in conjunction with the drawings. In the drawings:
- Figure 1: shows a flower pot according to this invention with a seedling; and
- Figure 2: shows the pot and seedling planted out.

In the present invention, most waste from animals and plants can be used as raw materials for forming a flower pot so long as the residue is organic. For instance, seeds, grain, weeds straw, bamboo, bamboo grasses, wood, fish fertilisers, ground fish, flowers, wild plants, meal waste, compost, various types of starch, bean curd lees, grass clippings, vegetables, fruits, meat, poultry, medicinal plants, fish, sea weed, peanuts, sap, fallen leaves, sea shells, soybeans, corn and the like all can be used as raw material available for the purpose of the present invention. The materials are dried well, ground to a powder and used alone in a mixture.

As a biodegradable polymer which can be mixed with such materials, polymers such as polylactic acid and hydroxybutyric acid which are degraded due to actions of biochemically active substances such as bacteria, enzymes and organisms, and those which are themselves not biodegradable but become degradable when an easily-degradable substance, such as starch, is mixed therein can be used.

Any percentage of the biodegradable polymer mixed in the materials as described above is possible if it is sufficient for forming the mixture into a flower pot, but the percentage is not required to be unnecessarily high. The mixing ratio varies depending on the composition of the materials, but a mixing ratio in a range from 10 to around 30 per cent is enough for achieving the object of the present invention. In the case of pots for seedlings, however, the wall is thin, so that sometimes the mixing ratio in a range from 60 to 70 per cent may be required.

When the mixing ratio of the biodegradable polymer is high, degradation is delayed and in some cases several years are required for the mixture to be degraded, so that a mixing ratio of the biodegradable polymer should be set taking into account the desired period of time required for degradation or other factors.

The size of a flower pot, thickness of a wall thereof, and other parameters are decided according to the application. For instance, in a case of a cup-shaped flower pot having a very thin wall and used for growing a seedling, a thickness in a range from 0.5 to 1.0 mm is sufficient, although it depends on the mixing ratio of the biodegradable polymer.

### Embodiment

100 litres of garbage mainly comprising vegetables from ordinary dwellings (with a water content from 80 to 90%) is mixed with 60 litres of an adjusting material, comprising equal quantities of rice bran, bean-curd waste, wheat bran, sawdust, chaff, and straw with a water content of 15%, and which is then heated and the resultant mixture fermented. The water content of the final mixture is adjusted by adding bacillus uchishiro with a weight ratio of 1/10000% to the mixture.

The mixture with a water content of 55 to 60% is put in a tank and kept there for 7 to 8 hours whilst agitating and adjusted so that the materials are constantly kept under a temperature of 75° C.

Further such materials as straw, chaff and weeds are mixed with the materials, the mixture is dried and adjusted so that the final water content is less than 1%, and the dried mixture is pulverised in a pulveriser.

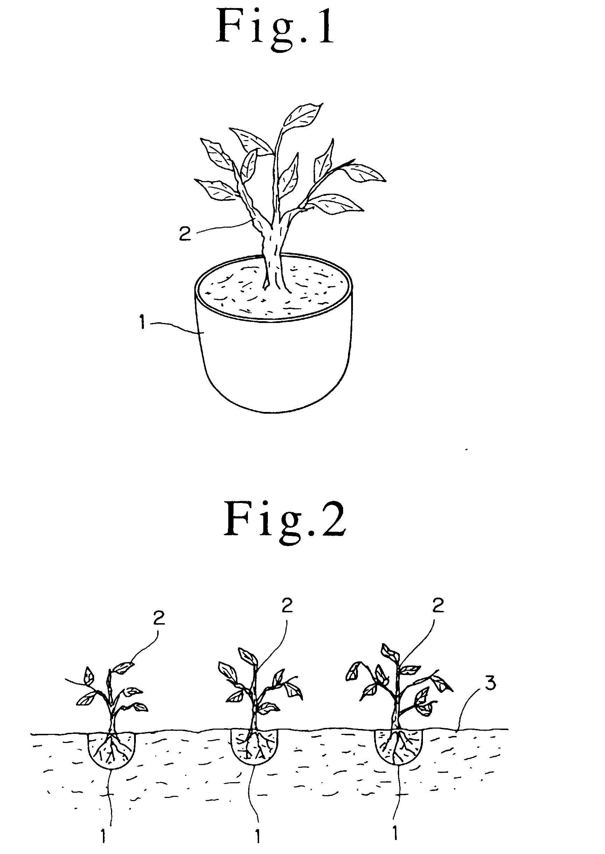

The biodegradable polymer is then added in a proportion of 35% weight to the pulverised materials, the resultant mixture is well agitated to suitable consistency and injected into an injection moulding machine to form the material into a flower pot 1 as shown in Figure 1. If a colour is required, a colouring matter is added together with the biodegradable polymer. Such organic pigments as anthraquinone yellow, quinacridone red, cyanine blue, and cyanine green may be used as the colouring matter. The bacillus uchishiro used in the above described embodiment comprises several types of subcultured soil borne fungi, and the "Uchishiro-kin" is a name of the product sold by Seiwa Seiken Kabushiki Kaisha. In the embodiment, Cell Green (a trademark registered by Dycell Kagaku Kogyo Kabushiki Kaisha) was used as the biodegradable polymer, and a Bent injection machine was used as the moulding machine.

As example, a tomato seedling 2 is planted in a flower pot 1 as shown in Figure 1, and the flower pot is sold. A user buries the flower pot as it is in the soil 3 as shown in Figure 2.

Biodegradation occurs and gradually proceeds for 2 to 3 weeks, and then the flower pot loses its form and decomposes within about 1 to 3 months. The decomposed flower pot 1 functions as a fertiliser and contributes to the growth of the seedling.

In the embodiment described above, the flower pot 1 is moulded using an injection moulding machine, but the flower pot 1 may be moulded with a press and there is no limitation concerning the moulding method of the present invention.

As described above, the present invention is characterised in that pulverised residue of animal and plant as a main raw material is mixed with a biodegradable polymer and the mixture is formed into a flower pot, and provides the following effects.
1) A quantity of animal and plant waste including garbage to be treated can be reduced.
2) The main material used for forming a flower pot is the animal and plant waste, the flower pot can be buried as it is in the soil. The buried flower pot then decomposes and functions as a fertiliser.
3) When used as a pot for planting and growing a seedling therein, the flower pot can be buried as it is in the soil, so that it is not necessary to remove the seedling from the flower pot before planting. In addition the flower pot decomposes and functions as a fertiliser for the seedling.

## Claims

1. A plant container **characterised in that** the container is produced by moulding from a mixture of a biodegradable polymer with dried and pulverised animal or plant waste material.

2. A plant container according to Claim 1, **characterised in that** the container is produced by moulding from a mixture of a biodegradable polymer with composted garbage as the waste material.

3. A process for the production of a plant container from animal and/or plant waste forming a main raw ingredient, the process being **characterised by** the steps:-
a) drying the animal and/or plant waste;
b) pulverising the dried waste into a fine powder;
c) mixing a biodegradable polymer with the pulverised waste powder;
d) agitating the mixture to a moulding consistency for forming into a flower pot; and
e) feeding the mixture to a moulding machine to form a flower pot.

4. A process in accordance with Claim 3, **characterised in that** the animal and/or plant waste is heated and fermented, the resultant mixture then being dried to a water content of less that 1% and pulverised.

5. A process in accordance with Claim 3 or 4, **characterised in that** an adjusting material is added to the animal and/or plant waste, the adjusting material being selected from one or more of rice bran, bean-curd waste, wheat bran, sawdust, chaff, and straw.

6. A process in accordance with claim 3 or 4 or 5, **characterised in that** about 100 parts by volume vegetable waste (80 to 90% water content) is mixed with about 60 parts by volume adjusting material (15% water content) and the mixture heated and fermented with the addition of a soil borne fungi (bacillus uchishiro), the mixture being agitated for 7 to 8 hours at a temperature of 75° C, and thereafter dried to a water content less that 1% and pulverised.

7. A process in accordance with any preceding claim 3 to 6, **characterised in that** the biodegradable polymer is added in a proportion of 35% by weight to the pulverised material, the mixture being agitated and used in an injection moulding machine to form the container.

8. A process in accordance with any preceding claim, **characterised in that** the biodegradable polymer is a polylactic acid or hydroxybutyric acid or a product known as "Cell Green".

9. A process in accordance with any preceding claim, **characterised in that** the animal or plant waste comprises one or more of seeds, grain, weeds straw, bamboo, bamboo grasses, wood, fish fertilisers, ground fish, flowers, wild plants, meal waste, compost, various types of starch, bean curd lees, grass clippings, vegetables, fruits, meat, poultry, medicinal plants, fish, sea weed, peanuts, sap, fallen leaves, sea shells, soybeans, corn.

10. A process in accordance with any preceding claim, **characterised in that** starch is mixed in with the biodegradable polymer.
